# EUROPEAN PATENT APPLICATION

(11) **EP 4 679 793 A1**
(43) Date of publication of application: **14.01.2026**
(21) Application number: 23926369.2
(22) Date of filing: 30.06.2023
(51) Int. Cl.: H04L 43/045, H04L 41/12, H04L 43/0811, H04W 24/06, H04L 43/0817, H04L 41/06, H04L 41/0677, H04L 41/22

(54) **INFORMATION PROVISION DEVICE, INFORMATION PROVISION METHOD, AND INFORMATION PROVISION PROGRAM**

(30) Priority: 03.03.2023 JP 2023033236
(71) Applicant: NTT Docomo Business, Inc., Tokyo 100-8019 (JP)
(72) Inventor: ITO, Yoshiya, Tokyo 100-8019 (JP); MORIFUJI, Fukumasa, Tokyo 100-8019 (JP)
(74) Representative: Hoffmann Eitle
(86) International application number: PCT/JP2023/024526
(87) International publication number: WO 2024/185160

(57) **Abstract**

An information providing device (30) includes a monitoring unit (331) and a display control unit (332). The monitoring unit (331) monitors occurrence of a failure on a network. The display control unit (332) displays a screen visualizing topology, a situation of connection from a site of a user to a fixed communication network and a mobile communication network, and a monitoring result from the monitoring unit (331). The topology indicates the connection relations among the ISP network included in a network, the fixed communication network and the mobile communication network connected to the ISP network, and a closed network.

## Description

### [Technical Field]

The present invention relates to an information providing device, an information providing method, and an information providing program.

### [Background Art]

There has been known a technique of visualizing a configuration of a network on a map (e.g., see Non Patent Literature 1).

### [Citation List]

### [Non Patent Citation]

Non Patent Literature 1: network visualization/automation & map-based management NetworkBrain, [online], [searched on February 24, 2023], Internet (https://www.ntt-at.co.jp/product/networkbrain/)

### [Summary of Invention]

### [Technical Problem]

However, related techniques have such a problem that only limited information on a network can be visualized. For example, when a user has a plurality of bases connected to the network, the technique described in Non Patent Literature 1 has difficulty in visualizing a network configuration of each base.

### [Solution to Problem]

In order to solve the above-described problems and achieve the object, an information providing device includes: a monitoring unit configured to monitor occurrence of a failure on a network; and a display control unit configured to display a screen that visualizes topology indicating connection relations among an ISP network included in the network, a fixed communication network and a mobile communication network connected to the ISP network, and a closed network, a situation of connection from a site of a user to the fixed communication network and the mobile communication network, and a monitoring result from the monitoring unit.

### [Advantageous Effects of Invention]

According to the present invention, a lot of information on the network configuration can be visualized.

### [Brief Description of Drawings]

FIG. 1 illustrates a configuration of an entire network.
FIG. 2 illustrates a configuration example of an information providing device.
FIG. 3 illustrates an example of a network configuration screen.
FIG. 4 is a flowchart illustrating a flow of monitoring processing.
FIG. 5 is a flowchart illustrating a flow of display control processing.
FIG. 6 illustrates a configuration example of a computer that executes an information providing program.
FIG. 7 illustrates a configuration of a network of a software-defined-wide area network (SD-WAN).

### [Embodiments for Carrying Out the Invention]

An embodiment of an information providing device, an information providing method, and an information providing program according to the present application will be described in detail below with reference to the drawings. Note that the present invention is not limited to the embodiment described below.

### [First Embodiment]

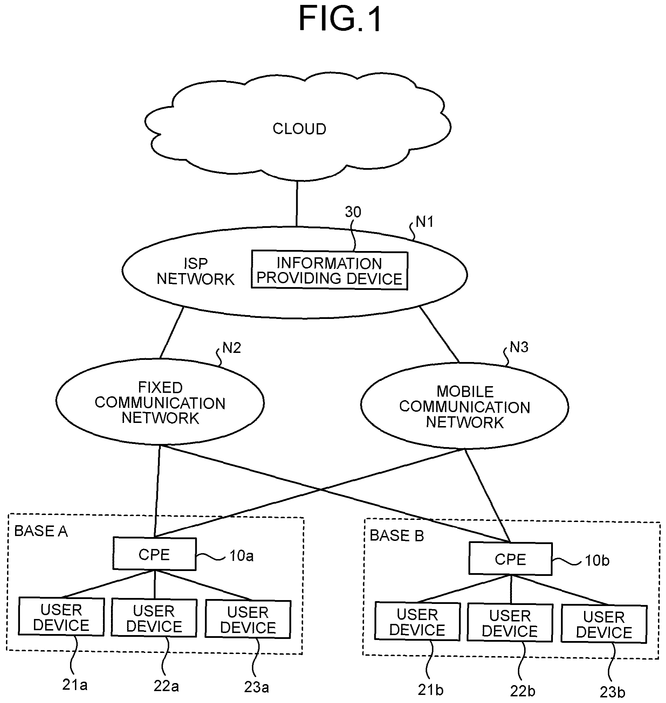

First, a configuration of an entire network including an information providing device will be described with reference to FIG. 1. FIG. 1 illustrates the configuration of the entire network.

As illustrated in FIG. 1, the network includes an Internet service provider (ISP) network N1, a fixed communication network N2, and a mobile communication network N3. The fixed communication network N2 and the mobile communication network N3 are connected to the ISP network N1.

The ISP network N1 is provided by an ISP. For example, the ISP provides connection service by using the ISP network N1. According to the connection service, a user device of a user can access an external network such as a cloud.

The fixed communication network N2 is provided by a line provider. The fixed communication network N2 is a wired communication network using an optical fiber cable and the like. The line provider can provide an optical line using the fixed communication network N2.

The mobile communication network N3 is provided by a line provider. The mobile communication network N3 is a wireless communication network using radio waves. The line provider can provide a wireless communication line such as 5G, 4G, and long term evolution (LTE) by using the mobile communication network N3.

Furthermore, customer premises equipment (CPE) is arranged at each site of a user. One or more user devices are connected to the CPE. In each base, the CPE constitutes a user network.

In an example of FIG. 1, CPE 10a is arranged in a base A. A user device 21a, a user device 22a, and a user device 23a are connected to the CPE 10a. Furthermore, CPE 10b is arranged in a base B. A user device 21b, a user device 22b, and a user device 23b are connected to the CPE 10b.

In the following description, the CPE 10a and the CPE 10b may be referred to as pieces of CPE 10 without distinction. The CPE 10 is connected to both the fixed communication network N2 and the mobile communication network N3. Note that the number of pieces of CPE included in the network and the number of user devices connected to CPE are not limited to those illustrated in the figure.

Examples of a user device connected to the CPE 10 include a personal computer, a tablet terminal, and a smartphone. The user device connected to the CPE 10 may be an IoT device such as a multifunction machine, a wearable terminal, and a sensor. The CPE 10 and the user device are connected by wire or wirelessly.

Furthermore, an information providing device 30 collects information on the entire network, and provides the collected information to the user. The information providing device 30 is arranged in the ISP network N1. The information providing device 30 is not limited to being arranged at an illustrated position, and is requested to be arranged at a position where information on nodes of the network can be collected. Note that the node is a user device, a server, a network device, or the like constituting a network.

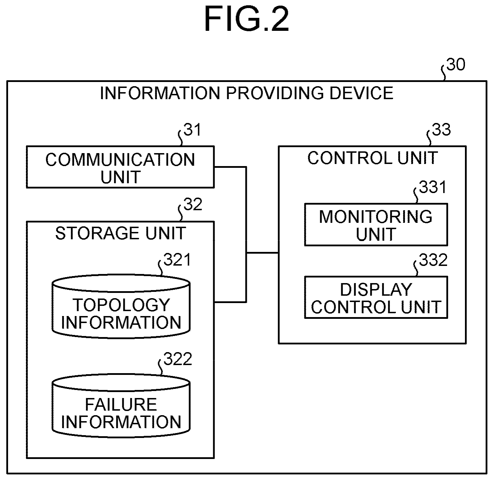

FIG. 2 illustrates a configuration example of the information providing device. As illustrated in FIG. 2, the information providing device 30 includes a communication unit 31, a storage unit 32, and a control unit 33.

The communication unit 31 communicates with other devices. The communication unit 31 is, for example, a network interface card (NIC).

The storage unit 32 is a storage device such as a hard disk drive (HDD), a solid state drive (SSD), and an optical disk. Note that the storage unit 32 may be a data rewritable semiconductor memory such as a random access memory (RAM), a flash memory, and a non volatile static random access memory (NVSRAM).

The storage unit 32 stores an operating system (OS) and various programs executed by the information providing device 30. The storage unit 32 stores topology information 321 and failure information 322.

The topology information 321 is topology of the network. The topology information 321 is graph-type data including the nodes of the network and an edge representing connection between the nodes. The nodes includes not only a physical device but a virtual or logical element such as service. Furthermore, the edge represents a service usage situation in addition to wired connection and wireless connection.

The failure information 322 relates to a failure of the network. The failure information 322 includes information for identifying a node and an edge in which a failure has occurred among nodes and edges included in the topology information 321. Furthermore, the failure information 322 includes the contents of the failure.

The control unit 33 controls the entire information providing device 30. The control unit 33 includes, for example, an electronic circuit and an integrated circuit. The electronic circuit includes a central processing unit (CPU), a micro processing unit (MPU), and a graphics processing unit (GPU). The integrated circuit includes an application specific integrated circuit (ASIC), and a field programmable gate array (FPGA).

Furthermore, the control unit 33 includes an internal memory for storing a program defining various processing procedures and control data, and executes each piece of processing by using the internal memory. Furthermore, the control unit 33 functions as various processing units by various programs operating.

For example, a monitoring unit 331 and a display control unit 332 are included.

The monitoring unit 331 monitors occurrence of a failure on the network. The monitoring unit 331 executes a connection test on a node on the ISP network and a communication route including a user device in the site of the user or the CPE 10, and determines whether or not a failure has occurred in the node based on the result of the connection test.

The monitoring unit 331 adds the node in which the failure has occurred and the contents of the failure in the failure information 322.

For example, the monitoring unit 331 determines whether or not a failure has occurred in a specific node on the network based on a result of transmitting Ping to the node. Furthermore, the monitoring unit 331 determines whether or not a failure has occurred in a specific node on the network by attempting login to a management portal provided in the node.

The display control unit 332 displays a screen visualizing topology, a situation of connection from the site of the user to the fixed communication network and the mobile communication network, and a monitoring result from the monitoring unit 331. The topology indicates the connection relations among the ISP network included in the network, the fixed communication network and the mobile communication network connected to the ISP network, and the closed network.

The display control unit 332 acquires topology from the topology information 321. Furthermore, the display control unit 332 acquires the node in which the failure has occurred and the contents of the failure from the failure information 322.

Note that the display control unit 332 can display a screen on a user device of the base. The user can view the screen displayed by the display control unit 332 via the user device.

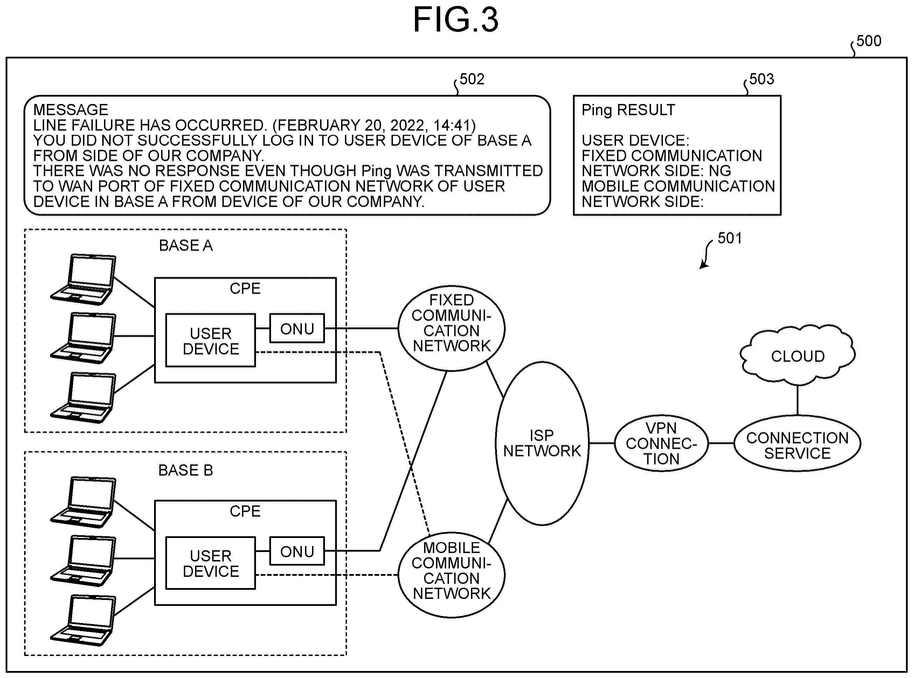

The display control unit 332 displays a network configuration screen 500 in FIG. 3. FIG. 3 illustrates an example of the network configuration screen.

As illustrated in FIG. 3, the topology of the network is displayed in a region 501 of the network configuration screen 500. CPE, a user device connected to the CPE, the fixed communication network, the mobile communication network, the ISP network, a virtual private network (VPN) connection, connection service, and a cloud correspond to nodes. Furthermore, the connection between nodes is represented by a line (edge). A dotted line means wireless connection between nodes. Furthermore, a node of the connection service indicates a closed network.

As illustrated in FIG. 3, the display control unit 332 displays a situation of connection from a plurality of bases (base A and base B) of the user to the fixed communication network and the mobile communication network. Furthermore, the display control unit 332 displays information on VPN connection established in the ISP network.

The user device and the CPE are nodes representing a physical device. The VPN connection and the connection service are nodes representing a virtual (or logical) element. The fixed communication network, the mobile communication network, the ISP network, and the cloud are nodes containing a large number of physical devices and virtual elements.

The display control unit 332 displays information indicating a node included in the topology and having a failure based on a monitoring result from the monitoring unit 331. For example, in the region 501, the display control unit 332 may fill a node in which a failure has occurred with a specific color, or superimpose and display a specific object (e.g., × mark) on the node in which a failure has occurred or an edge connected to the node.

Furthermore, the display control unit 332 displays the contents of the failure in a region 502 and a region 503. For example, the contents of the failure occurring in the CPE of the base A are illustrated in the region 502. Furthermore, a result of the connection test is illustrated in the region 503.

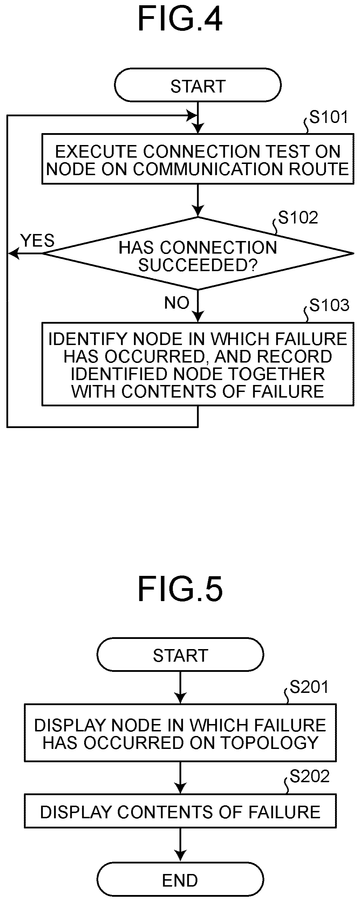

Monitoring processing to be executed by the monitoring unit 331 will be described with reference to FIG. 4. FIG. 4 is a flowchart illustrating a flow of the monitoring processing.

As illustrated in FIG. 4, first, the monitoring unit 331 executes a connection test on a node on a communication route (Step S101). Example of the connection test includes transmission of Ping. For example, the communication route passes from the user device 21a, the user device 22a, and the user device 23a in the base A in FIG. 1 to a cloud via the fixed communication network N2 or the mobile communication network N3, and the ISP network N1.

When the connection succeeds (e.g., in case where there is response to Ping) (Step S102, Yes), the monitoring unit 331 returns to Step S101, and executes a connection test on another node.

When the connection does not succeed (e.g., in case where there is no response to Ping) (Step S102, No), the monitoring unit 331 identifies a node in which a failure has occurred, and records the identified node in the failure information 322 together with the contents of the failure (Step S103).

Display control processing to be executed by the display control unit 332 will be described with reference to FIG. 5. FIG. 5 is a flowchart illustrating a flow of the display control processing.

As illustrated in FIG. 5, first, the display control unit 332 displays a node in which a failure has occurred on topology (Step S201). Furthermore, the display control unit 332 displays the contents of the failure (Step S202). For example, the display control unit 332 displays information acquired from the failure information 322 on the network configuration screen 500.

### [Effects of First Embodiment]

As described above, the information providing device 30 includes the monitoring unit 331 and the display control unit 332. The monitoring unit 331 monitors occurrence of a failure on the network. The display control unit 332 displays a screen visualizing topology, a situation of connection from a site of a user to a fixed communication network and a mobile communication network, and a monitoring result from the monitoring unit 331. The topology indicates the connection relations among the ISP network included in a network, the fixed communication network and the mobile communication network connected to the ISP network, and a closed network. As described above, the information providing device 30 can visualize a lot of information on the network configuration including information on a failure.

The display control unit 332 displays, on the screen, a situation of connection from a plurality of sites of the user to the fixed communication network and the mobile communication network. This enables the user to intuitively grasp a situation of the connection between the plurality of sites of the user.

The display control unit 332 displays information on VPN connection established in the ISP network on the screen. This causes the user to know not only topology of a physical network but a situation of a virtual network.

The display control unit 332 displays, on the screen, information indicating a node included in the topology and having a failure based on a monitoring result from the monitoring unit 331. This enables the user to intuitively grasp a location where a failure has occurred.

### [System Configuration and Like]

Furthermore, each component of each illustrated device is functionally conceptual, and is not necessarily required to be physically configured as illustrated in the drawings. That is, a specific form of distribution and integration of each device is not limited to the illustrated form, and all or a part thereof can be functionally or physically distributed or integrated in any unit in accordance with various loads, usage conditions, and the like. Moreover, all or any part of each processing function of each device can be implemented by a CPU or a program analyzed and executed by the CPU, or can be implemented as hardware using wired logic. Note that the program may be executed not only by the CPU but by another processor such as a GPU.

Furthermore, all or a part of the processing described as being automatically performed among pieces of processing described in the embodiment can be manually performed. Alternatively, all or a part of the processing described as being manually performed can be automatically performed by a known method. In addition, the processing procedure, the control procedure, the specific names, and the information including various pieces of data and parameters illustrated in the specification and the drawings can be changed in any way unless otherwise specified.

### [Program]

In one embodiment, the information providing device 30 can be implemented by installing, in a desired computer, an information providing program for executing the above-described information processing as package software or online software. For example, an information processing device can be caused to function as the information providing device 30 by causing the information processing device to execute the above-described information providing program. The information processing device mentioned here includes a desktop or notebook personal computer. In addition, examples of the information processing device include a tablet terminal, a smartphone, a mobile communication terminal such as a mobile phone and a personal handyphone system (PHS), and a slate terminal such as a personal digital assistant (PDA).

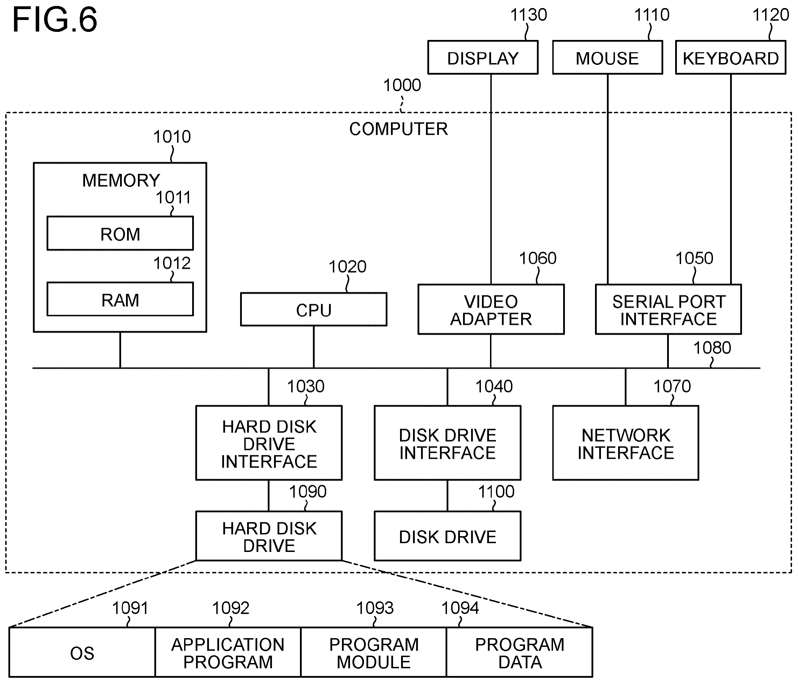

FIG. 6 illustrates a configuration example of a computer that executes the information providing program. A computer 1000 includes, for example, a memory 1010 and a CPU 1020. Furthermore, the computer 1000 includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk and an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an operating system (OS) 1091, an application program 1092, a program module 1093, and program data 1094. That is, a program defining each piece of processing of the information providing device 30 is implemented as the program module 1093 in which a computer executable code is written. The program module 1093 is stored in, for example, the hard disk drive 1090. For example, the program module 1093 for executing processing similar to the functional configuration in the information providing device 30 is stored in the hard disk drive 1090. Note that the hard disk drive 1090 may be replaced with a solid state drive (SSD).

Furthermore, setting data used in the processing of the embodiment described above is stored in, for example, the memory 1010 and the hard disk drive 1090 as the program data 1094. Then, the CPU 1020 reads the program module 1093 and the program data 1094 stored in the memory 1010 and the hard disk drive 1090 to the RAM 1012 as necessary, and executes the processing of the embodiment described above.

Note that the program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (e.g., local area network (LAN) and wide area network (WAN)). Then, the program module 1093 and the program data 1094 may be read by the CPU1020 from another computer via the network interface 1070.

### [Comparison with SD-WAN]

There has been known a technique called a software defined-wide area network (SD-WAN). In the technology, software defined networking (SDN) that controls a network with software is applied to a wide area network (WAN). The SD-WAN implements flexible network configuration and traffic control in inter-base connection and cloud connection (reference: Software-Defined Network Service(https://www.ntt.com/business/services/network/vpn/s d-networks.html)).

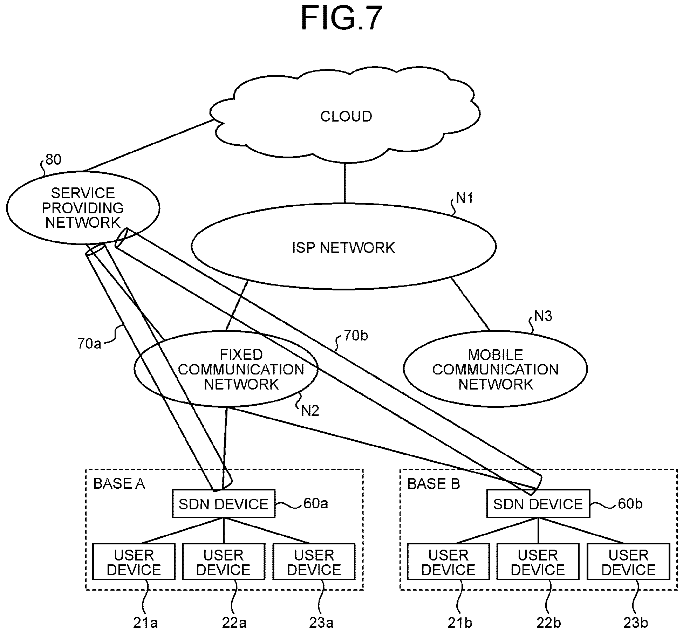

In contrast, the SD-WAN has difficulty in achieving the above-described embodiment. This will be described with reference to FIG. 7. FIG. 7 illustrates a configuration of a network of the SD-WAN.

As illustrated in FIG. 7, when the SD-WAN is implemented, an SDN device is installed in each base. An SDN device 60a is installed in the base A. Furthermore, an SDN device 60b is installed in the base B.

The SDN device 60a and the SDN device 60b are connected to a service providing network 80 via a virtual private network (VPN). The service providing network 80 is used by a service provider to provide connection service for connecting a base with a base or a base with a cloud.

A VPN tunnel 70a is a virtual line constructed on the fixed communication network N2, and connects the SDN device 60a with the service providing network 80. A VPN tunnel 70b is a virtual line constructed on the fixed communication network N2, and connects the SDN device 60b with the service providing network 80. The VPN tunnel 70a and the VPN tunnel 70b implement the VPN.

Furthermore, the SD-WAN may have a breakout function in which a user device is connected to a cloud or the like without the service providing network 80. For example, when the breakout function is used, the SDN device 60a is connected to the cloud via the fixed communication network N2 and the ISP network N1.

Here, the SDN device 60a and the SDN device 60b do not have a function of transmitting packets to both the fixed communication network N2 and the mobile communication network N3. Therefore, the SDN device 60a and the SDN device 60b cannot select one of the fixed communication network N2 and the mobile communication network N3 to cause a user device to perform communication by using the selected communication network.

For example, the SDN device 60a and the SDN device 60b relay communication between the housed user device and the fixed communication network N2, but do not relay communication between the housed user device and the mobile communication network N3.

In the first place, a service provider using the service providing network 80 merely provides connection service via the VPN. Therefore, occurrence situations of congestion and failures of the ISP network N1, the fixed communication network N2, and the mobile communication network N3 cannot be acquired from the service providing network 80.

Furthermore, in the above-described embodiment, connection service having a function similar to that of the SD-WAN can be provided by performing software-defined (SD) processing on the ISP network N1. For example, in addition to the VPN and the breakout function, the SD-implemented ISP network N1 (hereinafter, underlay network system) can provide control of network quality using software, provision of a management portal, and a security function using deep packet inspection (DPI) and the like. The control of network quality includes switching of a connection form between a guarantee type and a best effort type, a band change, and the like.

Furthermore, the information providing device 30 may be implemented by the underlay network system. In this case, the monitoring unit 331 can monitor occurrence situations of congestion and failures of the ISP network N1, the fixed communication network N2, and the mobile communication network N3. As described above, the monitoring unit 331 can execute a connection test on user devices in the ISP network and a site of the user or a node on a communication route including the CPE 10. In contrast, the service providing network 80 in FIG. 7 cannot execute a connection test on a node on a communication route to the CPE 10.

There is no need to use the VPN between each base and the underlay network system. Therefore, the communication control unit 141 transmits a packet transmitted from the user device to the fixed communication network N2 or the mobile communication network N3 without tunneling.

The CPE 10 is not required at all to have a function related to the VPN such as tunneling. In this case, the CPE 10 transmits the packet transmitted from the user device to the fixed communication network N2 or the mobile communication network N3 while not (never) performing tunneling constantly.

### [Explanation of Reference]

- N1: ISP NETWORK
- N2: FIXED COMMUNICATION NETWORK
- N3: MOBILE COMMUNICATION NETWORK
- 10, 10a, 10b: CPE
- 30: INFORMATION PROVIDING DEVICE
- 31: COMMUNICATION UNIT
- 32: STORAGE UNIT
- 33: CONTROL UNIT
- 321: TOPOLOGY INFORMATION
- 322: FAILURE INFORMATION
- 331: MONITORING UNIT
- 332: DISPLAY CONTROL UNIT
- 500: NETWORK CONFIGURATION SCREEN
- 501, 502, 503: REGION

## Claims

1. An information providing device comprising:
a monitoring unit configured to monitor occurrence of a failure on a network; and
a display control unit configured to display a screen that visualizes topology indicating connection relations among an ISP network included in the network, a fixed communication network and a mobile communication network connected to the ISP network, and a closed network, a situation of connection from a site of a user to the fixed communication network and the mobile communication network, and a monitoring result from the monitoring unit.

2. The information providing device according to claim 1, wherein the display control unit displays, on the screen, a situation of connection from a plurality of sites of the user to the fixed communication network and the mobile communication network.

3. The information providing device according to claim 1, wherein the display control unit displays, on the screen, information of VPN connection established in the ISP network.

4. The information providing device according to claim 1, wherein the display control unit displays, on the screen, information indicating a node included in the topology and having a failure based on a monitoring result from the monitoring unit.

5. An information providing method to be executed by an information providing device, comprising:
a monitoring process of monitoring occurrence of a failure on a network; and
a display control process of displaying a screen that visualizes topology indicating connection relations among an ISP network included in the network, a fixed communication network and a mobile communication network connected to the ISP network, and a closed network, a situation of connection from a site of a user to the fixed communication network and the mobile communication network, and a monitoring result from the monitoring process.

6. An information providing program that causes a computer to execute:
a monitoring step of monitoring occurrence of a failure on a network; and
a display control step of displaying a screen that visualizes topology indicating connection relations among an ISP network included in the network, a fixed communication network and a mobile communication network connected to the ISP network, and a closed network, a situation of connection from a site of a user to the fixed communication network and the mobile communication network, and a monitoring result from the monitoring step.
